# EUROPÄISCHE PATENTANMELDUNG

(11) **EP 1 077 364 A2**
(43) Veröffentlichungstag der Anmeldung: **21.02.2001**
(21) Anmeldenummer: 00116972.1
(22) Anmeldetag: 08.08.2000
(51) Int. Cl.: G01H 1/00, G01R 29/00

(54) **Verfahren zur Signalanalyse**

(30) Priorität: 16.08.1999 DE 19938723
(71) Anmelder: Prüftechnik Dieter Busch AG, 85737 Ismaning (DE)
(72) Erfinder: Lysen, Heinrich, 85748 Garching (DE)

(57) **Zusammenfassung**

Die Erfindung betrifft ein Verfahren zur Analyse eines aus einer Abfolge von diskreten Amplitudenwerten bestehenden Signals, zu dem Anteile mit unterschiedlicher Phasenlage beitragen. Dabei wird umgeformtes Signal gebildet, bei dem die Reihenfolge der Amplitudenwerte so abgeändert ist, daß die Amplitudenwerte oder statt dessen an die Amplutidenwerte angenäherte Näherungswerte entsprechend ihrer Größe in absteigender oder aufsteigender Reihenfolge aufeinanderfolgen.

## Beschreibung

Die Erfindung betrifft ein Verfahren zur Analyse eines aus einer Abfolge von diskreten Amplitudenwerten bestehenden Signals, zu dem Anteile mit unterschiedlicher Phasenlage beitragen.

Bei der Auswertung der Form von Signalen, zu denen Anteile mit unterschiedlicher Phasenlage beitragen, ist es kann es erforderlich sein, Effekte auf die Signalform zu eliminieren, die lediglich auf die Phasenverschiebung einzelner Signalanteile zurückgehen, d.h. man möchte die Signalform vom Phasenwinkel befreien. Dies ist insbesondere dann problematisch, wenn die relative Phasenlage der Signalanteile nicht oder nicht genau bekannt ist.

Es ist Aufgabe der vorliegenden Erfindung, ein Signalanalyseverfahren zu schaffen, welches die Signalform in effizienter und einfacher Weise von auf Phasenunterschiede der Signalanteile zurückgehenden Effekten befreit.

Diese Aufgabe wird erfindungsgemäß durch ein Verfahren gelöst, wie es in Anspruch 1 beschrieben ist.

Bei dieser Lösung ist vorteilhaft, daß das erhaltene umgeformte Signal, welches im wesentlichen eine amplitudensortierte Variante des ursprünglichen Signals darstellt, von Phaseneffekten befereit ist.

Die Sortierung kann dabei in exakter Form, d.h. so ausgeführt werden, daß die Amplitudenwerte exakt erhalten bleiben und nur ihre Abfolge verändert wird. In der Regel wird es jedoch ausreichend sein, die Sortierung näherungsweise, d.h. so auszuführen, daß die Amplitudenwerte des sortierten Signals nicht exakt, sondern nur näherungsweise den urprünglichen Amplitudenwerte entsprechen, was den Rechenaufwand erheblich reduzieren kann. Dabei werden die Näherungswerte vorzugsweise dadurch gebildet, daß allen Amplitudenwerten, die jeweils in eine bestimmte Größenklasse fallen, die jeweils einen bestimmten Größenbereich abdeckt, der gleiche Näherungswert zugeordnet wird.

Das Sortieren erfolgt vorzugsweise dadurch, daß ermittelt wird, wieviele der Amplitudenwerte jeweils in eine bestimmte der verschiedenen Größenklassen fallen, denen entsprechend dem abgedeckten Größenbereich jeweils ein bestimmter Näherungswert zugeordnet ist, und für jede Größenklasse, beginnend mit den ersten freien Platz, soviele aufeinanderfolgende freie Plätze eines Felds mit dem dieser Größenklasse zugewiesen Näherungswert beschrieben werden, wie Amplitudenwerte in diese Größenklasse gefallen sind, wobei sich die Bearbeitungsreihenfolge der Größenklassen nach dem der jeweiligen Größenklasse zugewiesenen Näherungswert in aufsteigender bzw. absteigender Richtung bestimmt.

Vorzugsweise handelt es sich bei dem Signal um ein bearbeitetes Signal zur Schadensanalyse an mindestens einem sich zyklisch bewegenden Maschinenelement, insbesondere eines Wälzlagers, welches durch die Bewegung des Maschinenelements verursacht wird. Bei dem bearbeiteten Signal handelt es sich vorzugsweise um einen Signalanteil mit einer einstellbaren Periode, der von dem ursprünglich aufgenommen Signal separiert wurde, wobei das sortierte Signal zur Schadensanalyse herangezogen wird. Bei der Periode handelt es sich vorzugsweise um eine für einen Schaden des Maschinenelements charakteristische Periode.

Besonders geeignet ist dieses Verfahren beispielsweise für die Schadensanalyse von Schwingungssignalen von Wälzlagern, wobei es sich bei dem Signalausschnitt vorzugsweise um über mehrere Perioden gemittelte Signalanteile des Schwingungssignals handelt, die eine für den Schaden charakteristische Periodizität haben.

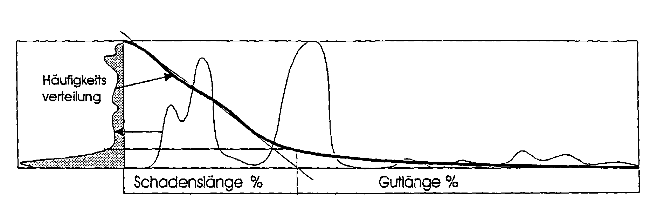

Im folgenden wird die Erfindung anhand der beiliegenden einzigen Figur näher erläutert, die einen Signalabschnitt vor und nach der Amplitudensortierung nebst ermittelter Häufigkeitsverteilung zeigt.

Die dünne durchgezogene Linie stellt ein Meßssignal dar, bei welchem es sich z.B. um ein einen Anteil eines Beschleunigungssignal im Zeitbereich handeln kann, welches mittels eines Beschleunigungsaufnehmers an einem rotierenden, belasteten Wälzlager bzw. einem damit schwingungsgekoppelten Maschinenelement aufgenommen wurde, wobei der dargestellte Anteil nur die Signalanteile darstellt, die eine bestimmte Periodendauer haben, z.B. die Überrollperiode eines Schadens in der Außenringlauffläche des Lagers. Solche Signalanteile können mittels eines entsprechenden Filters aus dem Gesamtsignal separiert werden, wobei im wesentlichen über mehrere Perioden gemittelt wird. Der so erhaltene Signalanteil ist dann ein Maß für die Tiefe und Länge des Schadens. Jedoch können über den Filterzeitraum bzw. Mittelungszeitraum auftretende Phasendifferenzen zwischen oder während den berücksichtigten einzelnen Perioden zu einer "Verzerrung" des gesuchten Signalanteils in dem Sinne führen, daß die aus der Berücksichtigung, d.h. Addition, mehrerer Perioden erhaltene Signalform von der Signalform während einer einzelnen Periode stark abweicht und die Schadensanalyse aus der Signalform erschwert.

Dieser Fall kann beispielsweise durch einen Schlupf der Wälzkörper über den Teil der Umlaufbewegung auftreten, in welchem sie sich außerhalb des Lastgebiets des Lagers befinden. Wird nun das auf einen bestimmten Wälzkörper zurückgehende Signal betrachtet, so haben zwar die während des Abrollens des Wälzkörpers im Lastbereich erzeugten Signalanteile keine Phasenverschiebung zueinander, während jedoch die bei dem nächsten Umlauf erzeugten Signale, d.h. wenn der betreffende Wälzkörper wieder in das Lastgebiet eingetreten ist, bezüglich der in dem vorhergehenden Durchlauf erzeugten Signale aufgrund des Schlupfs außerhalb des Lastbereichs eine unbekannte Phasenverschiebung haben, so daß in dem über mehere Wälzkörperumläufe gemittelten Signal Strukturartefakte aufgrund des Wälzkörperschlupfs auftreten, was die Auswertung des Signals, insbesondere hinsichtlich der Länge des von dem Wälzkörper überrollten Schadens oder an dem Wälzkörper selbst vorliegenden Schadens, erschwert.

Solche Phaseneffekte können jedoch eliminiert werden, indem das erhaltene Signal so transformiert wird, daß es nach seiner Amplitude absteigend oder aufsteigend sortiert wird, d.h. das Signal wird hinsichtlich der Abszisse, d.h. hier der Zeitachse, neu sortiert, wobei z.B. dann ganz links die größte Amplitude und ganz rechts die kleinste Amplitude des ursprünglichen Signals liegt, wie dies anhand der fetten durchgezogenen Linie in der Figur zu sehen ist. Bei diesem Sortieren ist in der Regel keine 100%-ige Erhaltung der Amplitudenwerte erforderlich, so daß herkömmliche Sortierverfahren unnötig langsam sind, insbesondere wenn die Abszisse relativ fein gerastert ist.

Bei der Anwendung des bevorzugten näherungsweisen Sortierverfahren wird das Signal zunächst entlang der Abszisse (hier Zeitachse) in *n* Werte diskretisiert (falls das Signal nicht ohnehin schon mit dem gewünschten Raster diskret ist), wodurch sich eine Menge von *n* Zahlen bzw. Amplitudenwerten ergibt. Sodann werden *m* verschiedene Größenklassen gebildet, die aufeinanderfolgend jeweils einen bestimmten Amplitudengrößenbereich abdecken, wobei die Anzahl *m* entsprechend der gewünschten Genauigkeit der Sortierung gewählt wird. Die Breite *b* ist vorzugsweise für alle Größenklassen gleich und ergibt sich aus der Differenz der maximalen und der minimalen Signalamplitude, geteilt durch die Anzahl der Größenklassen, d.h. die Ordinate wird ebenfalls gerastert.

Anschließend wird die Verteilung dieser Amplitudenwerte auf die *m* verschiedenen Amplituden- bzw. Größenklassen ermittelt, d.h. die Amplitudenachse wird in *m* Bereiche unterteilt und es wird ermittelt, wie viele der *n* Amplitudenwerte jeweils in einen bestimmten Bereich fallen, so daß auf diese Weise die Häufigkeitsverteilung der Amplitudenwerte ermittelt wird. Dabei wird jeder Größenklasse ein bestimmter Größenwert zugeteilt, der den Näherungswert für alle in diese Klasse fallenden Amplitudenwerte bildet und sich beispielsweise aus dem Mittelwert der beiden Klassengrenzen ergeben kann. Das amplitudensortierte Signal wird dann gebildet, indem der Reihe nach die Plätze in einem Feld mit *n* Plätzen beschrieben werden, wobei für jede Größenklasse, beginnend mit dem ersten freien Platz in dem Feld, so viele aufeinanderfolgende freie Plätze des Feldes mit dem dieser Größenklasse zugewiesenen Näherungswert beschrieben werden, wie Amplitudenwerte in diese Größenklasse gefallen sind, wobei sich die Bearbeitungsreihenfolge der Größenklassen nach dem der jeweiligen Größenklasse zugewiesenen Näherungswert in aufsteigender oder absteigender Richtung bestimmt.

Im vorliegenden Beispiel wird dabei mit der höchstwertigen Größenklasse, d.h. mit den größten Amplitudenwerten, begonnen, wobei der erste Näherungswert in den Platz mit der Nummer 1 am linken Rand des Felds geschrieben wird. Als Ergebnis ergibt sich dann die mit der fett gezeichneten Linie bezeichnete Verteilung, bei welcher die größten Amplituden am linken Rand und die kleinsten Amplituden am rechten Rand angeordnet sind.

Aus dieser amplitudensortierten Verteilung, d.h. dem umgeformten Signal, kann dann im vorliegenden Beispiel eine relative Schadenslänge ermittelt werden, vorzugsweise, indem eine Ausgleichsfunktion, z.B. nach der Methode der kleinsten Fehlerquadratsumme, an die amplitudensortierte Verteilung angepaßt wird. Die Ausgleichfunktion kann so gewählt sein, daß sie vier Parameter enthält, welche die Schadenstiefe, die Schadenslänge, die Rauschamplitude des Signal bzw. die Form des Schadens wiedergeben, wobei in der Figur die so ermittelte Schadenslänge angedeutet ist.

Natürlich könnten in dem Beispiel die Signalamplituden grundsätzlich auch mittels eines bekannten Sortierverfahrens exakt sortiert werden, d.h. mit vollständiger Amplitudentreue. Dafür wäre jedoch der Rechenaufwand um ein Vielfaches höher als bei dem beschriebenen Verfahren zum näherungsweisen Sortieren.

Bei üblichen Verfahren zum exakten Sortieren einer Menge von *n* Zahlen nach ihrer Größe in ein Feld mit *n* Plätzen, beispielsweise in absteigender Reihenfolge, wird so vorgegangen, daß die Zahlenmenge *n*-mal durchsucht wird, wobei beim ersten Durchlauf die größte Zahl, beim zweiten Durchlauf die zweitgrößte Zahl usw. ermittelt wird, und die so gefundenen Zahlen, beginnend mit dem ersten Platz des Felds, nach absteigender Größe nacheinander auf den jeweils nächsten noch freien Platz des Felds einsortiert werden, d.h. an der ersten Stelle des Felds steht dann die größte Zahl, an der zweiten die zweitgrößte Zahl usw. Nachteilig bei diesem Verfahren ist der hohe Rechenaufwand und die damit einhergehende geringe Geschwindigkeit für große *n*. Dies gilt auch für Fälle, in welchen ein exaktes Sortieren gar nicht erforderlich ist. Bei dem beschriebenen Verfahren zum näherungsweisen Sortieren ist dagegen vorteilhaft, daß die Menge von *n* Zahlen nur einmal durchlaufen werden muß, nämlich beim Bilden der Häufigkeitsverteilung, d.h. dem "Füllen" der Größenklassen, und daß ferner beim Beschreiben des Feld die ermittelte Häufigkeitsverteilung, d.h. die Größenklassen, ebenfalls nur einmal durchlaufen werden muß. Dadurch ist das näherungsweise Verfahren erheblich schneller als herkömmliche exakte Verfahren. Zwar ist bei dem näherungsweisen Verfahren die Sortiergenauigkeit dahingehend reduziert, daß statt der ursprünglichen Zahlen bzw. Amplitudenwerte die Größenwerte bzw. Näherungswerte der Größenklassen in das Feld geschrieben werden, d.h. die sortierten Amplitudenwerte entsprechen nicht genau den ursprünglichen Amplitudenwerten, so daß die "Größenauflösung" durch die Breite *b* der Größenklassen beschränkt und zu dieser umgekehrt proportional ist. Dieser Auflösungsverlust kann jedoch durch Verringerung der Breite *b* der Größenklassen, d.h. durch Verwendung einer großen Anzahl von Größenklassen, so klein wie erforderlich gehalten werden.

## Patentansprüche

1. Verfahren zur Analyse eines aus einer Abfolge von diskreten Amplitudenwerten bestehenden Signals, zu dem Anteile mit unterschiedlicher Phasenlage beitragen, wobei ein umgeformtes Signal gebildet wird, bei dem die Reihenfolge der Amplitudenwerte so abgeändert ist, daß die Amplitudenwerte oder statt dessen an die Amplutidenwerte angenäherte Näherungswerte entsprechend ihrer Größe in absteigender oder aufsteigender Reihenfolge aufeinanderfolgen.

2. Verfahren nach Anspruch 1, dadurch gekennzeichnet, daß die Näherungswerte dadurch gebildet werden, daß allen Amplitudenwerten, die jeweils in eine bestimmte Größenklasse fallen, die jeweils einen bestimmten Größenbereich abdeckt, der gleiche Näherungswert zugeordnet wird.

3. Verfahren nach Anspruch 2, dadurch gekennzeichnet, daß ermittelt wird, wieviele der Amplitudenwerte jeweils in eine bestimmte der verschiedenen Größenklassen fallen, denen entsprechend dem abgedeckten Größenbereich jeweils ein bestimmter Näherungswert zugeordnet ist, und für jede Größenklasse, beginnend mit den ersten freien Platz, soviele aufeinanderfolgende freie Plätze eines Felds mit dem dieser Größenklasse zugewiesen Näherungswert beschrieben werden, wie Amplitudenwerte in diese Größenklasse gefallen sind, wobei sich die Bearbeitungsreihenfolge der Größenklassen nach dem der jeweiligen Größenklasse zugewiesenen Näherungswert in aufsteigender bzw. absteigender Richtung bestimmt.

4. Verfahren nach Anspruch 2 oder 3, dadurch gekennzeichnet, daß die Differenz zwischen dem kleinsten und dem größten Amplitudenwert gebildet wird und die Breite der Größenklassen für alle Größenklassen gleich ist und sich aus dieser Differenz geteilt durch die Anzahl der Größenklassen ergibt.

5. Verfahren nach einem der vorhergehenden Ansprüche, dadurch gekennzeichnet, daß das umgeformte Signal einer Kurvenanpassung bzw. Ausgleichsrechung unterzogen wird.

6. Verfahren nach einem der vorhergehenden Ansprüche, dadurch gekennzeichnet, daß es sich bei dem Signal um ein bearbeitetes Signal zur Schadensanalyse an mindestens einem sich zyklisch bewegenden Maschinenelement handelt, welches durch die Bewegung des Maschinenelements verursacht wird.

7. Verfahren nach Anspruch 6, dadurch gekennzeichnet, daß es sich bei dem bearbeiteten Signal um einen Signalanteil mit einer einstellbaren Periode handelt, der von dem ursprünglich aufgenommen Signal separiert wurde, wobei das umgeformte Signal zur Schadensanalyse herangezogen wird.

8. Verfahren nach Anspruch 7, dadurch gekennzeichnet, daß es sich bei der Periode um einen für einen Schaden charakteristische Periode handelt.

9. Verfahren nach Anspruch 8, dadurch gekennzeichnet, daß es sich bei dem Maschinenelement um ein Wälzlager handelt.

10. Verfahren nach Anspruch 9, dadurch gekennzeichnet, daß aus dem umgeformten Signal die Schadenslänge ermittelt wird.
